Europäisches Patentamt

European Patent Office

Office européen des brevets

(11) Numéro de publication: **0 267 083**
**A1**

## (12) DEMANDE DE BREVET EUROPEEN

(21) Numéro de dépôt: **87402261.9**

(22) Date de dépôt: **09.10.87**

(51) Int. Cl.⁴: **G 21 C 19/20**
**G 21 C 13/06**

(30) Priorité: **22.10.86 FR 8614672**

(43) Date de publication de la demande:
**11.05.88 Bulletin 88/19**

(84) Etats contractants désignés: **BE DE GB IT**

(71) Demandeur: **COMMISSARIAT A L'ENERGIE ATOMIQUE**
**31/33, rue de la Fédération**
**F-75015 Paris (FR)**

(72) Inventeur: **Aubert, Michel**
**Chemin de Sainte Roustagne**
**F-04100 Manosque (FR)**

**Renaux, Charley**
**"Les Extrées"**
**F-13490 Jouques (FR)**

(74) Mandataire: **Mongrédien, André et al**
**c/o BREVATOME 25, rue de Ponthieu**
**F-75008 Paris (FR)**

(54) Installation de manutention du combustible dans un réacteur nucléaire à neutrons rapides.

(57) La manutention des assemblages (18a) formant le coeur (18) d'un réacteur nucléaire à neutrons rapides est assurée par un appareil (94) suspendu à un chariot (86) se déplaçant au-dessus d'un passage (44) formé radialement dans un bouchon-couvercle-coeur (40b) implanté dans un bouchon tournant unique surplombant le coeur. Lorsque le réacteur fonctionne, le passage (44) est obturé par un bouchon amovible auquel est suspendue une partie du bouchon-couvercle-coeur (36, 38). Des hottes (86, 96) équipées de sas permettent d'évacuer le bouchon amovible et de mettre en place l'installation de manutention (86, 94) sans rupture du confinement de la cuve (10) du réacteur.

FIG. 1

## Description

INSTALLATION DE MANUTENTION DU COMBUSTIBLE DANS UN REACTEUR NUCLEAIRE A NEUTRONS RAPIDES.

L'invention concerne un réacteur nucléaire à neutrons rapides dont le coeur est refroidi par un métal liquide contenu dans une cuve obturée par une dalle de fermeture horizontale.

Le coeur d'un tel réacteur est constitué d'assemblages juxtaposés disposés verticalement, le terme "assemblages" désignant ici indifféremment les assemblages combustibles, les assemblages fertiles et les assemblages de contrôle.

Les assemblages formant le coeur du réacteur doivent pouvoir être mis en place et remplacés périodiquement, sans qu'à aucun moment le confinement de la cuve soit rompu.

Le problème de la manutention des assemblages se complique si l'on observe qu'il est nécessaire, lors du fonctionnement du réacteur, d'effectuer des mesures immédiatement au-dessus du coeur et de pouvoir déplacer verticalement des barres absorbantes dans celui-ci, afin d'assurer le pilotage du réacteur. En effet, pour répondre à ces deux exigences, un bouchon-couvercle-coeur est suspendu à la dalle fermant la cuve du réacteur comme le montre le document FR-A-2 546 657. Ce bouchon-couvercle-coeur comprend notamment des fourreaux verticaux pour le guidage des barres absorbantes, ainsi que des tubes d'instrumentation situés immédiatement au-dessus de chacun des assemblages. L'espace situé au-dessus du coeur est ainsi occupé par les structures internes du bouchon couvercle coeur lorsque le réacteur est en fonctionnement.

Pour tenir compte de ces différents impératifs, dans le réacteur français Super-Phénix, le bouchon-couvercle-coeur est suspendu à un petit bouchon tournant monté de façon excentrée dans un grand bouchon tournant, ce dernier étant monté sur la dalle également de façon excentrée par rapport à l'axe du coeur. Par des rotations combinées des deux bouchons tournants, on peut ainsi transférer, à l'aide d'un appareil de manutention suspendu au petit bouchon tournant, chacun des assemblages entre son alvéole et un poste de chargement-déchargement prévu à cet effet à l'extérieur du coeur. Le transfert des assemblages dans une cuve annexe est ensuite réalisé au moyen d'un pot circulant sur deux rampes inclinées situées respectivement dans la cuve du réacteur et dans la cuve annexe et débouchant toutes deux dans un sas de transfert rotatif situé au-dessus de la dalle.

Bien que cette installation de manutention fonctionne de façon satisfaisante, la présence de deux bouchons tournants au-dessus du coeur a pour effet d'accroître le diamètre de la cuve et de multiplier les mécanismes. Le coût de l'ensemble du réacteur se trouve ainsi pénalisé.

Dans le document FR-A-2 214 940, il est proposé une nouvelle installation de manutention permettant de réduire sensiblement le coût du réacteur grâce à la suppression de l'un des bouchons tournants. Dans cette installation, le bouchon tournant unique présente une fente radiale que traverse l'appareil de manutention, cet appareil étant monté sur un chariot afin de pouvoir se déplacer d'une extrémité à l'autre de la fente radiale. La combinaison des déplacements du chariot avec les rotations du bouchon permet de transférer chacun des assemblages entre son alvéole dans le coeur du réacteur et un poste de chargement-déchargement extérieur à ce dernier.

Dans l'installation de manutention décrite dans ce document FR-A-2 214 940, la partie inférieure du dispositif de manutention porté par le chariot reste en permanence à l'intérieur de la cuve. Le confinement de cette dernière est préservé lors du fonctionnement du réacteur ainsi que lors de la manutention par un caisson blindé fixé au bouchon tournant de façon à coiffer la part1e de l'appareil de manutention située audessus de la dalle. Cette configuration présente différents inconvénients.

En premier lieu, il existe en permanence une discontinuité de la dalle à l'endroit où le bouchon est traversé par la fente, ce qui risque de créer des problèmes compte tenu notamment du gradient de température existant entre l'intérieur de la cuve et l'atmosphère surplombant la dalle, lors du fonctionnement du réacteur.

Un autre problème important concerne les risques de rupture du confinement provoqués par une intervention sur l'appareil de manutention. En effet, le document FR-A-2 214 940 prévoit qu'une telle intervention est possible après démontage du caisson blindé fixé sur le bouchon tournant. Cependant, s'il est prévu dans ces conditions de préserver le confinement en plaçant au-dessus de la fente un bloc de blindage, ce bloc ne peut être mis en place qu'après enlèvement complet de l'appareil de manutention et en particulier de la partie de cet appareil plongeant dans la cuve. Cet enlèvement ne pouvant être effectué qu'après démontage du caisson blindé, il existe donc une période pendant laquelle le confinement de la cuve n'est pas assuré.

Enfin, la présence de la fente dans une partie du bouchon tournant surplombant le coeur du réacteur impose que les structures internes suspendues à ce bouchon soient interrompues à l'emplacement de cette fente. Pour réduire cet inconvénient, on est donc amené à prévoir une fente aussi étroite que possible, ce qui constitue une contrainte supplémentaire pour le choix de l'appareil de manutention qui la traverse.

Une installation de manutention analogue a également été décrite dans le document FR-A-2 540 662. Dans ce document, aucune précision n'est donnée en ce qui concerne le maintien du confinement de la cuve du réacteur, ni en ce qui concerne la structure de l'appareil de manutention. Les inconvénients de l'installation de manutention précédemment décrite ne sont donc pas supprimés par ce document.

La présente invention a précisément pour objet un réacteur nucléaire à neutrons rapides équipé d'une installation de manutention ne comportant également qu'un seul bouchon tournant, comme les installations décrites dans les documents FR-A-2 214 940 et FR-A-2 540 662, mais dans laquelle les problèmes de la continuité de la dalle en fonctionnement normal, de la préservation du confinement de la cuve à tout instant, et de la continuité des structures internes en fonctionnement normal quel que soit le dimensionnement de l'installation de manutention sont résolus.

A cet effet, il est proposé conformèment à l'invention un réacteur nucléaire à neutrons rapides comprenant une cuve remplie de métal liquide et contenant un coeur formé d'assemblages verticaux juxtaposés, et un poste de chargement-déchargement des assemblages, situé à la périphérie du coeur, ladite cuve étant obturée par une dalle de fermeture horizontale comprenant un bouchon tournant dans lequel est implanté un bouchon-couvercle-coeur auquel sont suspendues des structures internes surplombant le coeur, un passage orienté radialement étant ménagé dans le bouchon-couvercle-coeur et dans les structures internes, ce passage étant traversé par un appareil de manutention des assemblages associé à des moyens pour déplacer cet appareil radialement dans ledit passage, de telle sorte qu'une rotation du bouchon tournant associée à une mise en oeuvre de ces moyens permet de transférer chacun des assemblages entre le coeur et le poste de chargement-déchargement à l'aide de l'appareil de manutention, caractérisé en ce que le bouchon-couvercle-coeur comporte un bouchon amovible obturant ledit passage dans des conditions de fonctionnement du réacteur, ce bouchon amovible comprenant une partie des structures internes, et en ce que l'appareil de manutention est escamotable en totalité dans une hotte de protection biologique fixée de façon démontable sur le bouchon-couvercle-coeur, dans des conditions de manutention des assemblages, deux premiers dispositifs d'obturation étant alors prévus respectivement sur le bouchon-couvercle-coeur, au-dessus du passage, et sur la hotte, pour préserver le confinement de la cuve et de la hotte lorsqu'elles sont déconnectées.

Grâce à la présence d'un bouchon amovible obturant le passage formé dans le bouchon-couvercle-coeur lorsque le réacteur est en fonctionnement, la dalle et les structures internes ne présentent dans ces conditions aucune discontinuité. De plus, le fait que l'appareil de manutention soit escamotable en totalité dans une hotte permet de préserver le confinement de la cuve à tout moment.

Dans un mode de réalisation particulièrement avantageux de l'invention, le poste de chargement-déchargement est constitué par un alvéole dépourvu d'assemblage, à la périphérie d'un sommier assurant le supportage des assemblages du coeur, un deuxième passage de dimensions autorisant le passage d'un seul assemblage étant formé dans le bouchon-couvercle-coeur ou dans le bouchon tournant, ce deuxième passage pouvant être amené verticalement au-dessus dudit alvéole par une rotation du bouchon tournant, le bouchon-couvercle-coeur comportant un deuxième bouchon amovible obturant le deuxième passage dans des conditions de fonctionnement du réacteur, une installation de chargement-déchargement permettant le transport des assemblages entre ledit alvéole et une cellule extérieure, au travers du deuxième passage.

Grâce à cette configuration, le diamètre du bouchon tournant peut être réduit par rapport à la configuration classique dans laquelle le poste de chargement-déchargement est situé à l'extérieur du coeur. Il en résulte une nouvelle diminution notable du coût du réacteur.

Dans ce mode de réalisation préféré, l'installation de chargement-déchargement comprend de préférence des rails de guidage horizontaux situés à une distance donnée au-dessus de la dalle et reliant une première zone située au-dessus du poste de chargement-déchargement à une deuxième zone située au-dessus de la cellule extérieure, et une hotte mobile sur ces rails et apte à être accouplée sur le bouchon tournant, autour du deuxième passage, lorsque cette hotte est dans la première zone, deux deuxièmes dispositifs d'obturation étant prévus respectivement sur le bouchon-couvercle-coeur, au-dessus du deuxième passage, et sur la hotte mobile, cette dernière contenant des moyens de manutention aptes à escamoter au moins un assemblage dans la hotte mobile.

La hotte de protection biologique comprend alors généralement une première partie, apte à être fixée sur le bouchon-couvercle-coeur, de hauteur inférieure à ladite distance, et dans laquelle est logé un chariot mobile sur des rails de guidage orientés radialement au-dessus dudit passage, et une deuxième partie apte à être fixée de façon démontable sur la première partie, et dans laquelle peut être évacué l'appareil de manutention, deux troisièmes dispositifs d'obturation étant prévus respectivement sur la première et la deuxième parties de la hotte, pour préserver le confinement de ces deux parties lorsqu'elles sont déconnectées.

Etant donné qu'aucune rotation du bouchon n'est possible lorsque celui-ci est accouplé sur la hotte mobile, on prévoit avantageusement, afin d'accroître la cadence de manutention, d'équiper la hotte mobile d'un barillet pourvu d'au moins deux logements pouvant recevoir chacun un assemblage. De cette manière, un assemblage neuf peut être introduit dans le poste de chargement-déchargement après évacuation d'un assemblage irradié.

Un mode de réalisation préféré de l'invention va maintenant être décrit, à titre d'exemple non limitatif, en se référant aux dessins annexés dans lesquels :

- la figure 1 est une vue de côté et en coupe représentant schématiquement un réacteur nucléaire à neutrons rapides équipé d'une installation de manutention conforme à l'invention, lors de la manutention des assemblages, le réacteur étant à l'arrêt,

- la figure 2 est une vue de côté et en coupe représentant à plus grande échelle une partie de la dalle et les structures internes surplombant le coeur du réacteur, lorsque ce dernier est en fonctionnement,

- la figure 3 est une vue de dessus des éléments représentés sur la figure 2, montrant notamment l'implantation du bouchon amovible sur le bouchon tournant,

- la figure 4 est une vue en coupe comparable à la figure 3 montrant les mêmes parties du réacteur lors du démontage des bouchons amovibles, au début d'une campagne de manutention des assemblages,

- la figure 5 est une vue comparable à la figure 4 illustrant la mise en place de l'appareil de manutention sur le bouchon tournant, et

- la figure 6 est une vue comparable à la figure 5 repésentant l'appareil de manutention dans sa position de fonctionnement.

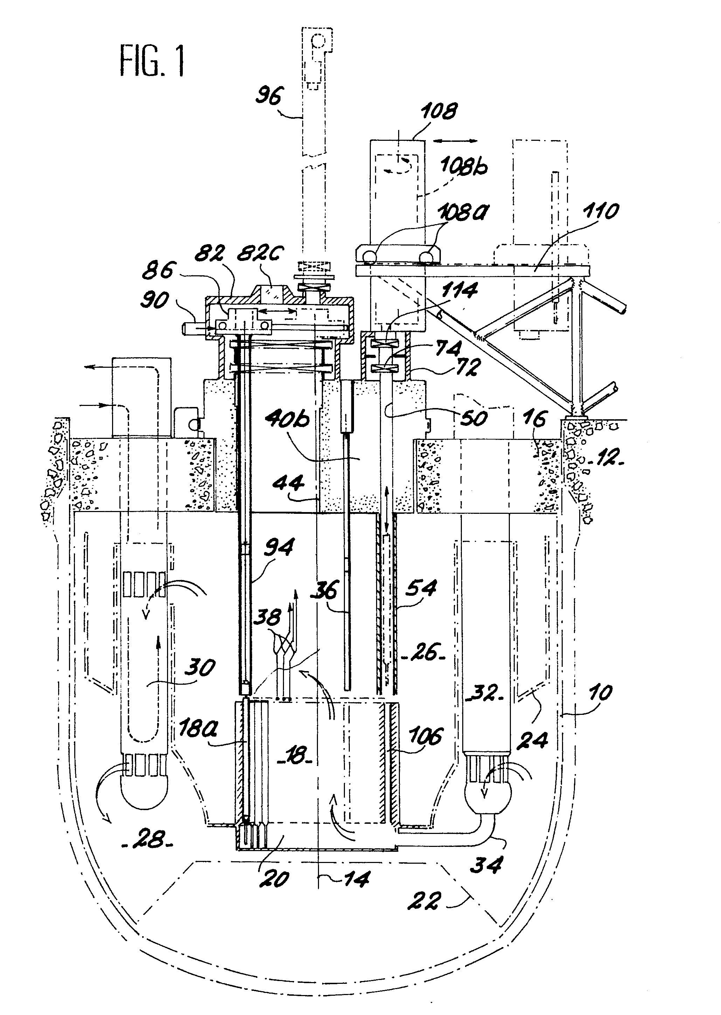

La figure 1 représente un réacteur nucléaire à neutrons rapides dont la cuve principale 10 est suspendue à l'intérieur d'un puits de cuve délimité par une paroi de béton 12. La cuve 10 présente une symétrie de révolution autour d'un axe vertical 14 et elle est obturée à son extrémité supérieure par une dalle de fermeture horizontale 16, également en béton.

La cuve 10 est remplie de métal liquide et contient dans sa partie centrale le coeur 18 du réacteur. Ce coeur 18 est formé d'un certain nombre d'assemblages combustibles, fertiles et de contrôle 18a. Les assemblages 18a sont constitués par des tubes verticaux, généralement de section hexagonale, dont les pieds reposent dans des alvéoles prévus à cet effet dans un sommier de supportage 20 et renfermant des aiguilles fissiles, fertiles ou absorbantes. Ce sommier 20 repose lui-même sur le fond de la cuve 10 par l'intermédiaire d'une structure rigide 22, généralement appelée platelage.

Dans l'exemple de réalisation représenté sur la figure 1, qui concerne un réacteur de type intégré, une cuve interne 24 divise l'intérieur de la cuve principale 10 en un collecteur chaud 26 principalement situé au-dessus du coeur 18 et un collecteur froid 28 principalement situé en-dessous de ce dernier. Des échangeurs de chaleur 30 et des pompes 32 sont suspendus à une zone périphérique de la dalle 16 et traversent la cuve interne 24.

Sous l'action des pompes 32, le métal liquide présent dans le collecteur froid 28 est injecté dans le sommier 20 par des canalisations 34. Il circule ensuite de bas en haut dans les assemblages 18a constituant le coeur du réacteur, pour ressortir dans le collecteur chaud 26. Enfin, le sodium liquide revient dans le collecteur froid 28 en traversant les échangeurs de chaleur 30.

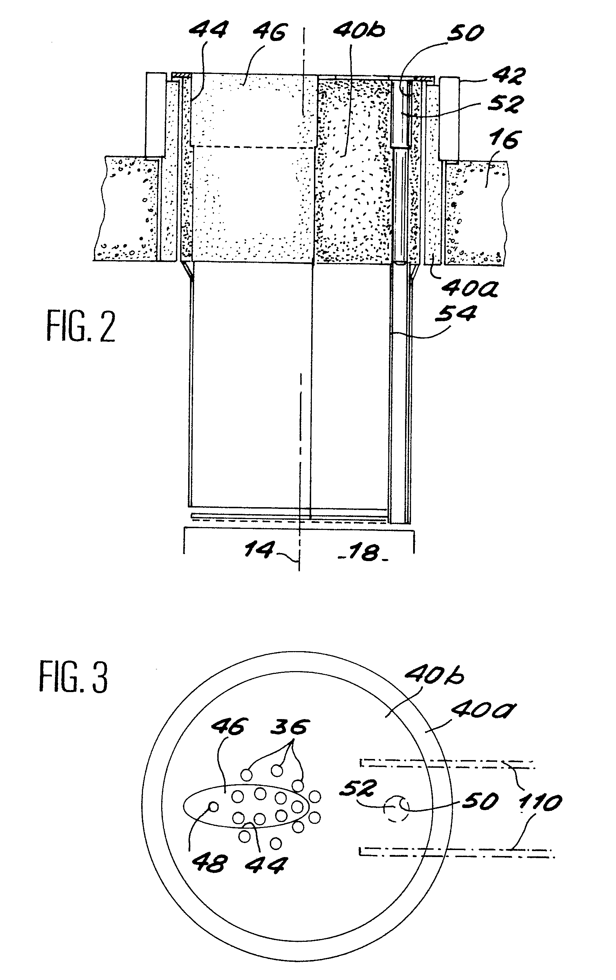

Conformèment à l'invention (figure 2), la dalle 16 supporte un bouchon tournant unique 40a dans lequel est implanté un bouchon-couvercle-coeur 40b auquel sont suspendues des structures internes qui occupent l'espace situé au-dessus du coeur 18.

Ces structures internes comprennent des fourreaux de guidage verticaux dont l'un est représenté en 36 sur la figure 1. Ces fourreaux 36 permettent de guider des barres de contrôle (non représentées), lors de leur déplacement vertical à l'intérieur du coeur 18 permettant d'assurer le pilotage et l'arrêt du réacteur.

Les structures internes comprennent également des tubes d'instrumentation verticaux représentés schématiquement en 38 sur la figure 1. Un tube 38 est placé immédiatement au-dessus de chacun des assemblages combustibles et éventuellement au-dessus des assemblages fertiles. Ces tubes 38 servent par exemple à effectuer des prélèvements de sodium ou à loger des appareils de mesure tels que des thermocouples.

Enfin, ces structures internes comprennent des plaques déflectrices situées au voisinage immédiat du coeur 18 et permettant d'infléchir l'écoulement du sodium liquide vers les fenêtres d'entrée des échangeurs 30. Ces plaques qui supportent les tubes d'instrumentation 38 ne sont pas représentées sur la figure 1, pour en simplifier la lecture.

Pour plus de détail concernant les structures internes suspendues à la dalle 16 au-dessus du coeur 18, on se reportera au document FR-A-2 546 657.

Dans le mode de réalisation représenté, l'axe vertical du bouchon tournant 40a est confondu avec l'axe 14 de la cuve principale 10, qui coïncide avec l'axe du coeur 18 du réacteur.

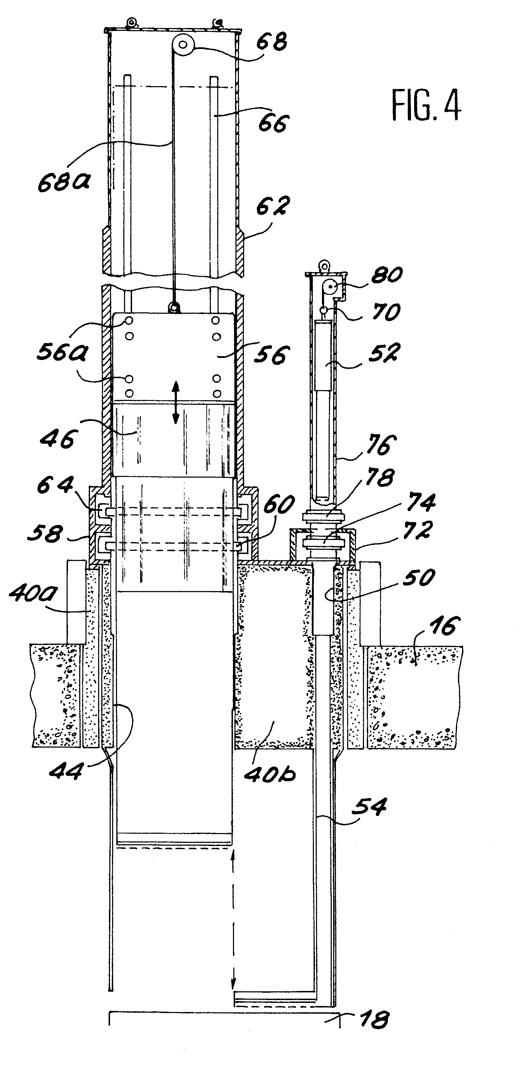

La structure présentée lors du fonctionnement du réacteur par le bouchon tournant 40a va maintenant être décrite plus en détail en se reportant aux figures 2 et 3.

Le bouchon tournant 40a, de forme annulaire, repose par l'intermédiaire d'un mécanisme 42 sur une ouverture circulaire d'axe 14 formée dans la dalle 16, au-dessus du coeur 18 du réacteur. Le mécanisme 42, de structure classique, sert à préserver le confinement de la cuve tout en permettant la rotation du bouchon 40a lors de la manutention.

Le bouchon 40a est pourvu d'une ouverture centrale également centrée sur l'axe 14 et dans laquelle est placé le bouchon-couvercle-coeur 40b servant au supportage des structures internes.

Conformément à l'invention, le bouchon-couvercle-coeur 40b est traversé par un passage 44 présentant en vue de dessus approximativement la forme d'une ellipse dont le grand axe est orienté radialement par rapport à l'axe 14 du bouchon (figure 3). Le passage 44 s'étend radialement depuis la périphérie du coeur 18 du réacteur jusqu'au-delà de l'axe vertical 14 du coeur, de telle sorte qu'un appareil de manutention traversant ce passage puisse accéder à tous les assemblages 18a du coeur par une rotation du bouchon tournant 40a, en se déplaçant d'une extrémité à l'autre du passage.

Selon une caractéristique originale de l'invention, lors du fonctionnement du réacteur, le passage 44 est totalement obturé par un bouchon amovible 46 complétant la protection biologique. Comme on le voit sur les figures 2 et 3, la partie des structures internes située en-dessous de ce bouchon amovible 46 est suspendue à ce dernier. Ainsi, lorsque le bouchon amovible 46 est en place lors du fonctionnement du réacteur, les structures internes ne présentent aucune interruption au droit du passage 44. Cette caractéristique permet de donner au passage 44 une largeur suffisante pour permettre le passage d'un appareil de manutention de dimension appropriée.

Comme l'illustre plus précisément la figure 3, la forme elliptique donnée au passage 44 et au bouchon amovible 46 favorise la découpe des structures intrnes, compte tenu des éléments qui les constituent. En particulier, on voit sur la figure 3 que sept des fourreaux de guidage des barres de contrôle peuvent être suspendus au bouchon amovible 46, de même qu'un dispositif 48 de prélèvement de sodium liquide permettant de déterminer une rupture de gaine, ce dispositif étant réalisé par ailleurs de façon classique. Les plaques déflectrices (non représentées) situées à la partie inférieure des structures internes sont également découpées selon une configuration généralement elliptique, des décrochements étant cependant prévus aux endroits où des tubes de prélèvement sont situés à proximité immédiate du contour de l'ellipse.

Dans le mode de réalisation représenté, le bouchon-couvercle-coeur 40b présente à proximité de sa périphérie un autre passage 50, de section circulaire réduite et d'axe vertical. Le diamètre de ce passage est juste suffisant pour permettre la traversée du bouchon 40b par l'un des assemblages constituant le coeur du réacteur. Lorsque le réacteur est en fonctionnement, ce deuxième passage 50 est obturé par un bouchon cylindrique 52 comme l'illustrent les figures 2 et 3.

Dans l'exemple de réalisation représenté, l'axe du passage 50 est disposé dans le même plan que le grand axe de l'ellipse formée par le passage 44, dans une position diamétralement opposée par rapport à l'axe 14 du bouchon tournant.

Le passage 50 se prolonge en-dessous du bouchon tournant 40a sous la forme d'un fourreau 54 (figure 2) dont l'extrémité inférieure est située immédiatement au-dessus du coeur 18 du réacteur. Comme on le verra ultérieurement, ce passage 50 prolongé par le fourreau 54 peut être amené verticalement au-dessus d'un poste de chargement-déchargement prévu dans une zone périphérique du coeur 18, par une rotation du bouchon tournant 40a.

Dans une variante de réalisation non représentée, l'axe vertical commun au bouchon-couvercle-coeur et au coeur est décalé par rapport à l'axe du bouchon tournant. Le deuxième passage 50 est alors formé non plus dans le bouchon-couvercle-coeur, mais dans le bouchon tournant.

Lorsqu'une campagne de manutention des assemblages doit intervenir, le bouchon amovible 46 et, lorsqu'il existe, le bouchon amovible 52 doivent être démontés sans rompre à aucun moment le confinement de la cuve principale. Ces opérations vont maintenant être décrites en se référant à la figure 4.

Pour effectuer l'enlèvement du bouchon amovible 46, un palonnier 56 muni de roulettes de guidage 56a est d'abord fixé sur la face supérieure du bouchon amovible 46.

Un sas blindé 58 équipé d'une vanne 60 également blindée est ensuite fixé sur la face supérieure du bouchon-couvercle-coeur 40b, autour du passage 44. La forme du sas 58 est telle qu'il prolonge vers le haut le passage elliptique 44.

Une hotte de manutention 62 équipée d'une vanne blindée 64 à son extrémité inférieure est alors accouplée de façon étanche sur le sas 58. La hotte 62 est blindée dans sa partie basse et elle est équipée intérieurement de rails 66 assurant le guidage des roulettes 56a du palonnier. Un treuil 68 est également logé dans la partie supérieure de la hotte et assure le levage de l'ensemble bouchon 46-palonnier 56 au moyen d'un câble 68a fixé sur ce dernier.

En actionnant le treuil 68, on escamote l'ensemble formé par le palonnier 56 et le bouchon amovible 46 à l'intérieur de la hotte 62. Le centrage et le guidage du bouchon 46 sont assurés par la coopération des roulettes 56a du palonnier 56 avec les rails 66.

Lorsque le bouchon-couvercle-coeur 40b comprend un deuxième bouchon amovible 52, celui-ci est enlevé simultanément au bouchon 46, d'une manière comparable.

Ainsi, après avoir fixé sur le bouchon 52 un anneau de levage 70, on fixe sur la face supérieure de la partie 40b du bouchon tournant, autour du passage 50, un sas blindé 72 contenant une vanne 74 également blindée. On accouple ensuite de façon étanche sur le sas 72 une hotte 76 dont l'extrémité inférieure est équipée d'une vanne de fermeture blindée 78.

Le levage du bouchon 52 à l'intérieur de la hotte 76 est réalisé à l'aide d'un treuil 80 monté à l'extrémité supérieure de la hotte et dont le câble est fixé sur l'anneau 70.

Lorsque les bouchons amovibles 46 et 52 sont escamotés respectivement à l'intérieur des hottes 62 et 76, les vannes 60, 64, 74 et 78 sont fermées. On peut alors désaccoupler les hottes des sas 58 et 72 sans rompre le confinement de la cuve principale du réacteur, ni le confinement des hottes elles-mêmes.

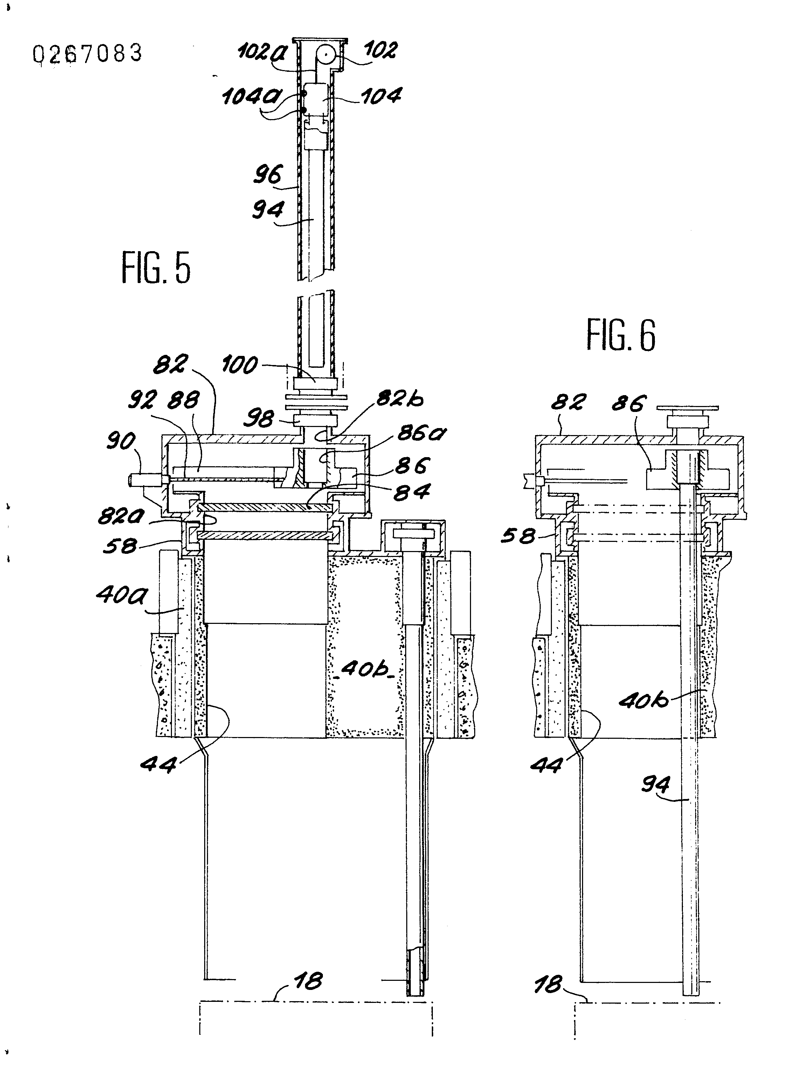

L'installation de manutention proprement dite est ensuite mise en place d'une manière qui va maintenant être décrite en se référant successivement aux figures 5 et 6.

Cette installation comprend tout d'abord une première enceinte de confinement 82 présentant approximativement la forme d'un parallélépipède rectangle. Cette enceinte 82 présente dans sa paroi inférieure un passage 82a de section identique à celle du passage elliptique 44, et dont l'ouverture est contrôlée par une vanne 84. L'enceinte 82 est accouplée de façon étanche sur le sas 58, de telle sorte que le passage 82a prolonge vers le haut le passage 44.

L'enceinte de confinement 82 contient un chariot 86 muni de roulettes (non représentées) coopérant avec des rails de guidage horizontaux 88 fixés à l'intérieur de l'enceinte 82. La coopération des roulettes sur les rails 88 autorise un déplacement du chariot 86 selon une trajectoire horizontale rectiligne orientée radialement par rapport à l'axe 14 (figure 1) et située dans le même plan vertical que le grand axe de l'ellipse formée par le passage 44. Le chariot 86 peut ainsi se déplacer au-dessus du passage 44 et d'une extrémité à l'autre de celui-ci.

Le déplacement du chariot 86 le long des rails de guidage 88 est commandé par un moteur 90 situé à l'extérieur de l'enceinte 82. Dans l'exemple représenté, l'arbre de sortie du moteur 90 entraîne en rotation une vis sans fin horizontale 92 coopérant avec un écrou (non représenté) monté sur le chariot 86. Tout autre moyen d'entraînement équivalent peut cependant être utilisé.

Le chariot 86 présente un évidement cylindrique 86a, d'axe vertical, dont la partie supérieure de plus grand diamètre constitue un réceptacle pour la tête d'un appareil de manutention 94, logé en totalité dans une hotte séparée 96 lorsqu'il n'est pas utilisé.

Pour permettre l'accouplement de la hotte 96 sur l'enceinte 82 et l'introduction de l'appareil 94 dans le logement 86a du chariot, un passage 82b contrôlé par une vanne 98 est formé dans la paroi supérieure de l'enceinte 82. Ce passage présente une section circulaire identique à celle de la partie supérieure du logement 86a et il est aligné avec ce dernier lorsque le chariot 86 se trouve au-dessus de l'extrémité du passage 44 la plus proche de l'axe 14 (figure 1). En pratique, les axes du passage 82b et du logement 86a sont alors confondus avec l'axe 14 afin de permettre la manutention d'un assemblage situé au centre du coeur.

De façon comparable, la hotte 96 présente à son extrémité inférieure apte à être accouplée sur l'enceinte 82, dans le prolongement du passage 82b, une vanne 100 qui reste fermée tant que l'accouplement n'est pas réalisé.

Les déplacements verticaux de l'appareil de manutention 94 sont réalisés au moyen d'un treuil 102 placé à l'extrémité supérieure de la hotte et dont le câble 102a est accroché à un palonnier 104. Ce palonnier 104 est pourvu de roulettes de guidage 104a coopérant avec des rails verticaux (non repésentés) situés à l'intérieur de la hotte. L'appareil de manutention 94 est fixé à ce palonnier 104, qui en assure en même temps le centrage et le guidage.

Lorsque la hotte 96 est accouplée sur l'enceinte 82, les vannes 98 et 100 sont ouvertes et le chariot 86 est amené en-dessous de la hotte dans la position illustrée sur la figure 5. On actionne alors le treuil 102, de façon à faire descendre l'appareil 94 jusqu'à ce que la tête de ce dernier soit logée et verrouillée dans le logement 86a du chariot.

Dans l'exemple de réalisation représenté sur les figures, les vannes 98 et 100 sont alors fermées à nouveau et la hotte 96 est évacuée. On se trouve alors dans les conditions illustrées par la figure 6, dans lesquelles le ringard 94, suspendu au chariot 86, plonge dans la cuve principale du réacteur, au travers du passage 44, jusqu'à proximité immédiate du coeur 18 du réacteur.

Il est à noter que toutes les opérations qui viennent d'être décrites, qui permettent d'amener le réacteur de sa condition de fonctionnement à sa condition de manutention des assemblages, sont réalisées sans qu'à aucun moment le confinement de la cuve principale 10 ne soit rompu.

La manutention des assemblages 18a du coeur entre les positions qu'ils occupent dans ce dernier et un poste de chargement-déchargement situé à la périphérie du coeur (représenté schématiquement en 106 sur la figure 1) est effectuée à l'aide de l'appareil de manutention 94, en combinant les rotations du bouchon tournant 40a avec les déplacements du chariot 86 auquel est suspendu cet appareil. Cette phase de manutention est semblable à celle qui est décrite en détail dans les documents FR-A-2 540 662 et FR-A-2 214 940. Pour une description plus détaillée, on se reportera donc à ces documents.

Avantageusement, un contrôle visuel de la manutention peut être effectué par un hublot blindé 82c (figure 1) formé dans la paroi supérieure de l'enceinte 82.

Il est à noter que la manutention est indépendante de la configuration particulière de l'appareil de manutention 94, qui peut prendre toute forme connue, à condition que sa structure en autorise l'effacement complet à l'intérieur d'une hotte telle que la hotte 96. A titre d'exemple, cet appareil peut être constitué par un ringard réalisé de la manière décrite dans le document FR-A-2 558 006.

Le poste de chargement-déchargement dans lequel sont transférés provisoirement les assemblages peut être situé à l'extérieur du coeur, au pied d'une rampe inclinée débouchant au-dessus de la dalle 16 du réacteur dans une hotte de transfert rotative dans laquelle débouche une deuxième rampe inclinée, dont l'extrémité inférieure est située dans une cellule de confinement extérieure. L'appareil 94 est alors utilisé pour placer successivement chacun des assemblages à évacuer dans un pot de transfert muni de roulettes lui permettant de se déplacer le long des rampes.

Une telle installation de chargement-déchargement correspond à celle qui est utilisée dans le réacteur français Super-Phénix et qui est décrite dans le Bulletin d'Information des Sciences et Techniques Nucléaires (BISTN) no182, de juin 1973.

Dans le mode de réalisation préféré de l'invention représenté notamment sur la figure 1, on utilise une installation de chargement-déchargement originale qui va maintenant être décrite en détail.

Dans cette installation, le poste de chargement-déchargement est situé non plus à l'extérieur du coeur 18 du réacteur mais à l'intérieur même de ce coeur, dans une zone périphérique. Ce rapprochement du poste de chargement-déchargement 106 de l'axe 14 du coeur permet de réduire la distance sur laquelle se déplace le chariot 86. Le diamètre du bouchon tournant 40a et, par conséquent, le diamètre de la cuve principale 10 du réacteur s'en trouvent réduits. Il en résulte une diminution appréciable du coût de fabrication du réacteur dans son ensemble.

En pratique, le poste de chargement-déchargement 106 est constitué par un alvéole dépourvu d'assemblage, dans le sommier 20 assurant le supportage du coeur.

L'installation de chargement-déchargement comprend tout d'abord le passage 50 formé dans le bouchon tournant 40a et le fourreau 54 prolongeant ce passage vers le bas jusqu'à proximité immédiate du coeur 18, de la manière qui a été décrite précédemment en se référant à la figure 4. Comme l'illustre la figure 1, le passage 50 et le fourreau 54 sont montés dans le bouchon tournant 40a de telle sorte qu'ils puissent être amenés au-dessus du poste de chargement-déchargement 106 par une rotation de ce bouchon.

L'installation de chargement-déchargement est complétée par une hotte mobile 108 pourvue de roulettes 108a lui permettant de se déplacer sur des rails horizontaux 110 montés de façon fixe au-dessus de la dalle 16 et de la paroi 12 par une structure de supportage 112 reposant sur cette dernière. Les rails 110 permettent de guider la hotte 108 dans une trajectoire orientée radialement par rapport à l'axe 14 de la cuve principale 10 du réacteur. La hotte 108 peut ainsi se déplacer entre deux positions extrêmes dans lesquelles elle se trouve respectivement située au-dessus du poste de chargement-déchargement 106 et au-dessus d'une cellule extérieure (non représentée). La première de ces positions est représentée en trait plein sur la figure 1. Le déplacement de la hotte 108 sur les rails 110 est assuré par des moyens connus (non représentés).

Pour effectuer le transfert d'un assemblage entre le poste de chargement-déchargement 106 et la hotte 108, cette dernière est amenée dans sa position extrême située verticalement au-dessus du poste 106, comme le montre la figure 1. Simultanément, par une rotation du bouchon tournant 40a, le passage 50 et le fourreau 54 sont alignés avec le poste de chargement-déchargement 106 de la manière également représentée sur la figure 1.

L'extrémité inférieure de la hotte 108 est alors accouplée de façon étanche au sas 72, qui prolonge vers le haut le passage 50, au-dessus du bouchon-couvercle-coeur 40b. Une vanne 114 obturant l'extrémité inférieure de la hotte mobile 108, de même que la vanne 74 située dans le sas 72, sont alors ouvertes. Le transfert de l'assemblage dans l'un ou l'autre sens peut alors être effectué à l'aide d'un mécanisme de manutention tel qu'un treuil (non représenté) situé dans la partie supérieure de la hotte mobile 108.

Lorsque le transfert est terminé, les vannes 74 et 114 sont à nouveau fermées et la hott 108 est désacouplée du sas 72. Une nouvelle manutention permettant de transférer un assemblage entre un point quelconque du coeur et le poste 106 peut alors être réalisée à l'aide de l'appareil 94, en combinant les rotations du bouchon 40a avec les translations du chariot 86.

Simultanément, l'assemblage contenu dans la hotte 108 peut être transféré dans la cellule extérieure.

De préférence, afin d'accroître le rendement, la hotte mobile 108 est équipée intérieurement d'un barillet 108b pourvu d'au moins deux logements aptes à être amenés à tour de rôle dans le prolongement du passage 50, du fourreau 54 et du poste 106, dans la position représentée en trait plein sur la figure 1. L'un des logements contient un assemblage neuf lorsque la hotte mobile 108 arrive dans cette position, alors que l'autre logement est vide. La rotation du barillet 108b à l'intérieur de la hotte 108 est commandée par un moteur permettant d'amener à tour de rôle chacun des logements dans le prolongement du passage 50.

De cette manière, on peut d'abord transférer un assemblage irradié du poste 106 jusque dans le logement vide de la hotte 108, puis, après une rotation du barillet, transférer un assemblage neuf dans le poste de chargement-déchargement 106 sans qu'il soit nécessaire de désacoupler la hotte

108 du sas 72.

Dans le mode de réalisation préféré qui vient d'être décrit, la réalisation en deux parties 82, 96 de la hotte de protection biologique dans laquelle peut s'escamoter l'appareil de manutention 94 s'explique par la nécessité de pouvoir faire tourner le bouchon 40a, malgré la présence des rails 110 portant la hotte mobile 108, lors de la manutention. Comme l'illustre clairement la figure 1, une telle rotation ne serait pas possible si la hotte 96 ne pouvait être démontée, car elle imposerait de placer les rails 110 au-dessus de la dalle 16 à une hauteur supérieure à la hauteur cumulée de l'enceinte 82 et de la hotte 96, ce qui n'est pas réaliste.

Au contraire, la hauteur de l'enceinte 82 peut être limitée à une hauteur légèrement supérieure à celle du chariot 86, ce qui permet de placer les rails 110 à une hauteur limitée au-dessus de la dalle 16.

Dans le cas où le poste de chargement-déchargement est situé à l'extérieur du coeur et où le transfert vers une cellule extérieure s'effectue par des rampes inclinées comme dans le réacteur Super-Phénix, la hotte constituée ici par les deux parties 82 et 96 peut au contraire être réalisée en une seule pièce.

Bien entendu, l'installation de manutention qui vient d'être décrite est applicable à un réacteur nucléaire à neutrons rapides du type à boucles, dans lequel les échangeurs de chaleur 30 et/ou les pompes 32 sont placés à l'extérieur de la cuve 10 contenant le coeur du réacteur.

## Revendications

1. Réacteur nucléaire à neutrons rapides comprenant une cuve (10) remplie de métal liquide et contenant un coeur (18) formé d'assemblages verticaux (18a) juxtaposés, et un poste de chargement-déchargement (106) des assemblages, situé à la périphérie du coeur, ladite cuve étant obturée par une dalle de fermeture horizontale (16) comprenant un bouchon tournant (40a) dans lequel est implanté un bouchon-couvercle-coeur (40b) auquel sont suspendues des structures internes (36, 38) surplombant le coeur, un passage (44) orienté radialement étant ménagé dans le bouchon-couvercle-coeur (40b) et dans les structures internes (36, 38), ce passage étant traversé par un appareil de manutention (94) des assemblages associé à des moyens (86, 90) pour déplacer cet appareil radialement dans ledit passage, de telle sorte qu'une rotation du bouchon tournant (40a) associée à une mise en oeuvre de ces moyens (86, 90) permet de transférer chacun des assemblages entre le coeur (18) et le poste de chargement-déchargement (106) à l'aide de l'appareil de manutention (94), caractérisé en ce que le bouchon-couvercle-coeur (40b) comporte un bouchon amovible (46) obturant ledit passage (44) dans les conditions de fonctionnement du réacteur, ce bouchon amovible comprenant une partie des structures internes (36, 38) et en ce que l'appareil de manutention (94) est escamotable en totalité dans une hotte de protection biologique (82, 96) fixée de façon démontable sur le bouchon-couvercle-coeur (40b), dans des conditions de manutention des assemblages, deux premiers dispositifs d'obturation (60, 64) étant alors prévus respectivement sur le bouchon-couvercle-coeur (40b), au-dessus du passage (44), et sur la hotte, pour préserver le confinement de la cuve et de la hotte lorsqu'elles sont déconnectées.

2. Réacteur nucléaire selon la revendication 1, caractérisé en ce que ledit passage (44) a en section approximativement la forme d'une ellipse dont le grand axe est orienté radialement.

3. Réacteur selon l'une quelconque des revendications 1 et 2, caractérisé en ce que le poste de chargement-déchargement (106) est constitué par un alvéole dépourvu d'assemblage, à la périphérie d'un sommier (20) assurant le supportage des assemblages (18a) du coeur, un deuxième passage (50) de dimensions autorisant le passage d'un seul assemblage étant formé dans le bouchon-couvercle-coeur (40b) ou dans le bouchon tournant (40a), ce deuxième passage pouvant être amené verticalement au-dessus dudit alvéole par une rotation du bouchon tournant (40a), le bouchon-couvercle-coeur (40b) comportant un deuxième bouchon amovible (52) obturant le deuxième passage dans des conditions de fonctionnement du réacteur, une installation de chargement-déchargement (108) permettant le transport des assemblages entre ledit alvéole et une cellule extérieure, au travers du deuxième passage (50).

4. Réacteur selon la revendication 3, caractérisé en ce que l'installation de chargement-déchargement comprend des rails de guidage horizontaux (110) situés à une distance donnée au-dessus de la dalle (16) et reliant une première zone située au-dessus du poste de chargement-déchargement (106) à une deuxième zone située au-dessus de la cellule extérieure, et une hotte (108) mobile sur ces rails et apte à être accouplée sur le bouchon tournant (40a), autour du deuxième passage (50), lorsque cette hotte est dans la première zone, deux deuxièmes dispositifs d'obturation (74, 114) étant prévus respectivement sur le bouchon-couvercle-coeur, au-dessus du deuxième passage, et sur la hotte mobile (108), cette dernière contenant des moyens de manutention aptes à escamoter au moins un assemblage dans la hotte mobile.

5. Réacteur nucléaire selon la revendication 4, caractérisé en ce que la hotte de protection biologique comprend une première partie (82), apte à être fixée sur le bouchon-couvercle-cour (40b), de hauteur inférieure à ladite distance, et dans laquelle est logé un chariot (86) mobile sur des rails de guidage orientés radialement au-dessus dudit passage (44), et une deuxième partie (96), apte à être fixée de façon démontable sur la première partie, et dans laquelle peut être évacué l'appareil de manutention (94), deux troisièmes dispositifs d'obturation (98, 100) étant prévus respectivement sur la première et la deuxième parties de la hotte, pour préserver le confinement de ces deux parties lorsqu'elles sont déconnectées.

6. Réacteur selon l'une quelconque des revendications 4 et 5, caractérisé en ce que la hotte mobile (108) comprend un barillet (108b) pourvu d'au moins deux logements pouvant recevoir chacun un assemblage (18a).

7. Réacteur selon l'une quelconque des revendications 3 à 6, caractérisé en ce que le coeur (18) du réacteur et le bouchon tournant (40a) ont un même axe vertical (14).

0267083

FIG. 1

0267083

FIG. 2

**44  46  40b  50  42  52  16  40a  54  14  18**

FIG. 3

**40b  40a  46  36  52  50  110  48  44**

FIG. 4

0267083

0267083

FIG. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 214 940  (INTERATOM)<br>* Page 3, lignes 24-38; page 4, lignes 11-28; figures 1,3 *<br>--- | 1,7 | G 21 C   19/20<br>G 21 C   13/06 |
| A | GB-A-2 135 108  (WESTINGHOUSE)<br>* Page 2, lignes 34-62; figure 1 * &<br>FR-A-2 540 662 (Cat. D,A)<br>--- | 1 | |
| A | EP-A-0 150 148  (EDF)<br>* Page 8, ligne 23 - page 9, ligne 17; figures 1,3 *<br>--- | 1,4 | |
| A | US-A-4 002 529  (ANDREA)<br>* Colonne 15, ligne 24 - colonne 17, ligne 19; figures 1,27a-27f *<br>--- | 1,4,6 | |
| A | US-A-4 167 442  (TIMOFEEV)<br>* Colonne 5, ligne 67 - colonne 6, ligne 23; figures 1,11 *<br>----- | 1,3,4 | |

DOMAINES TECHNIQUES
RECHERCHES (Int. Cl.4)

G 21 C    1/00
G 21 C   13/00
G 21 C   19/00

Le présent rapport a été établi pour toutes les revendications

| Lieu de la recherche | Date d'achèvement de la recherche | Examinateur |
|---|---|---|
| LA HAYE | 19-01-1988 | JANDL F. |

EPO FORM 1503 03.82 (P0402)